# EUROPEAN PATENT APPLICATION

(11) **EP 4 618 173 A1**
(43) Date of publication of application: **17.09.2025**
(21) Application number: 23899661.5
(22) Date of filing: 31.10.2023
(51) Int. Cl.: H01M 4/13, H01M 10/54, H01M 10/0525

(54) **ELECTRODE SHEET AND RECOVERY METHOD THEREFOR, AND ELECTROCHEMICAL DEVICE**

(30) Priority: 09.12.2022 CN 202211580879
(71) Applicant: Xiamen Hithium Energy Storage Technology Co., Ltd., Xiamen, Fujian 361100 (CN)
(72) Inventor: LIAO, Linping, Xiamen, Fujian 361100 (CN)
(74) Representative: Viering, Jentschura & Partner mbB Patent- und Rechtsanwälte
(86) International application number: PCT/CN2023/128875
(87) International publication number: WO 2024/120080

(57) **Abstract**

An electrode sheet (10), a method for electrode sheet recycling, and an electrochemical apparatus are provided. The present disclosure relates to the field of energy storage apparatus. The electrode sheet (10) includes a current collector (11), a primer layer (12) disposed on at least one surface of the current collector (11), an active material layer (13) disposed on the primer layer (12), and an edge coating layer (14) disposed on at least one surface of the current collector (11) and connected to the primer layer (12). The primer layer (12) includes a first water-based binder. The edge coating layer (14) includes a second water-based binder and an inorganic material. After the electrode sheet (10) is immersed in water for a first preset time at a first preset temperature, a first peel strength of the primer layer (12) is less than a second peel strength of the edge coating layer (14). The electrode sheet (10) and the electrochemical apparatus provided in the present disclosure have relatively high recycling quality.

## Description

### CROSS-REFERENCE TO RELATED APPLICATION(S)

The application claims priority to Chinese Patent Application No. 2022115808792, filed December 09, 2022, and entitled "ELECTRODE SHEET, METHOD FOR ELECTRODE SHEET RECYCLING, AND ELECTROCHEMICAL APPARATUS", the entire disclosure of which is incorporated herein by reference.

### TECHNICAL FIELD

The present disclosure relates to the field of energy storage apparatus, in particular to an electrode sheet, a method for electrode sheet recycling, and an electrochemical apparatus.

### BACKGROUND

Lithium-ion batteries have been widely used in fields such as electronic devices, electric vehicles, industrial energy storage, etc., due to their advantages of high energy density, light weight, and high safety. With the rapid growth in the production and use of lithium-ion batteries, the number of spent lithium-ion batteries is also increasing. These spent lithium-ion batteries contain a large amount of non-renewable and economically valuable metal resources, such as aluminum foil or copper foil that can be used as a current collector, as well as lithium, cobalt, nickel, etc. Therefore, the effective recycling of the spent lithium-ion batteries is crucial to alleviating resource pressure and achieving sustainable development of the lithium-ion battery industry. However, during the recycling of existing electrode sheets, it is found that a new chemical reagent (e.g., a strong acid or a strong alkali, etc.,) is often added, which results in the damage or contamination to the current collector and an active material layer during the recycling, thereby reducing the recycling quality of the electrode sheet.

### SUMMARY

The present disclosure provides an electrode sheet, a method for electrode sheet recycling, and an electrochemical apparatus. During the recycling of the electrode sheet and the electrochemical apparatus, a primer layer and an edge coating layer can be peeled off step by step, which can avoid mutual contamination between the primer layer, the active material layer, and the edge coating layer, and improve the recycling quality of the electrode sheet and the electrochemical apparatus.

In an aspect of the present disclosure, an electrode sheet is provided in the present disclosure. The electrode sheet includes a current collector, a primer layer disposed on at least one surface of the current collector, an active material layer disposed on the primer layer, and an edge coating layer disposed on at least one surface of the current collector and connected to the primer layer. The primer layer includes a first water-based binder. The edge coating layer includes a second water-based binder and an inorganic material. After the electrode sheet is immersed in water for a first preset time at a first preset temperature, a first peel strength of the primer layer is less than a second peel strength of the edge coating layer.

In an aspect of the present disclosure, a method for electrode sheet recycling is provided in the present disclosure. The method for electrode sheet recycling is applicable to the electrode sheet in an aspect of the present disclosure and includes the following operations. The electrode sheet is provided, where the electrode sheet includes the current collector, the primer layer disposed on a surface of the current collector, the edge coating layer disposed on the surface of the current collector, and the active material layer disposed on the primer layer. The primer layer includes the first water-based binder. The edge coating layer includes the second water-based binder. The electrode sheet is immersed in a first aqueous solution for 1 min to 5 min, to make the first water-based binder swell. The electrode sheet in the first aqueous solution is sonicated, to separate a first composition from a second composition, where the first composition includes the primer layer and the active material layer, and the second composition includes the current collector and the edge coating layer. The second composition is immersed in a second aqueous solution for 1 min to 5 min, to make the second water-based binder swell. The second composition in the second aqueous solution is sonicated, to separate the edge coating layer from the current collector in the second composition.

In an aspect of the present disclosure, an electrochemical apparatus is provided. The electrochemical apparatus includes a positive electrode sheet, a negative electrode sheet, a separator, and an electrolyte solution. The positive electrode sheet and/or the negative electrode sheet is the electrode sheet in an aspect of the present disclosure.

By implementing the present disclosure, the following beneficial effects can be yielded.

After the electrode sheet provided in the present disclosure is immersed in water for the first preset time at the first preset temperature, the first peel strength of the primer layer is less than the second peel strength of the edge coating layer. It can be seen that when the electrode sheet in the present disclosure is recycled, the first peel strength of the primer layer is less than the second peel strength of the edge coating layer, and thus the primer layer can be separated from the current collector first, and then the edge coating layer can be separated from the current collector, thereby achieving staged recycling of the electrode sheet. As such, the active material layer and the current collector with relatively high purity can be recycled, and the primer layer and the edge coating layer will not be peeled off at the same time, and thus mutual contamination between the primer layer, the active material layer, and the edge coating layer can be prevented, and the recycling quality of the electrode sheet is not affected. In addition, in the present disclosure, a simple water immersion can make the first water-based binder and the second water-based binder dissolve and swell, such that the primer layer and the edge coating layer can be easily peeled off from the current collector step by step. In this way, the recycling is cost-effective, environmentally friendly, and free from the introduction of impurities, such that the recycling rate of the electrode sheet and the electrochemical apparatus is relatively high, and the recycling quality of the electrode sheet and the electrochemical apparatus is improved.

### BRIEF DESCRIPTION OF THE DRAWINGS

In order to describe more clearly technical solutions of embodiments of the present disclosure or the related art, the following will give a brief introduction to the accompanying drawings used for describing embodiments or the related art. Apparently, the accompanying drawings described below are some embodiments of the present disclosure. Based on these drawings, those of ordinary skill in the art can also obtain other drawings without creative effort.

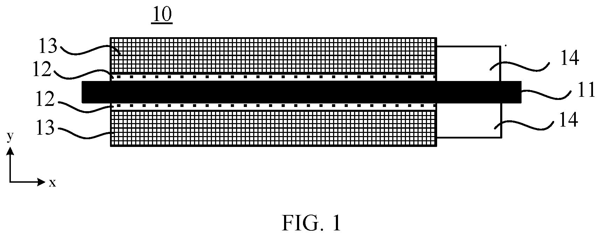

FIG. 1 is a schematic structural view of an electrode sheet provided in the present disclosure.

Reference signs: electrode sheet 10, current collector 11, primer layer 12, active material layer 13, and edge coating layer 14.

### DETAILED DESCRIPTION

Lithium-ion batteries have been widely used in fields such as electronic devices, electric vehicles, industrial energy storage, etc., due to their advantages of high energy density, light weight, and high safety. With the rapid growth in the production and use of lithium-ion batteries, the number of spent lithium-ion batteries is also increasing. These spent lithium-ion batteries contain a large amount of non-renewable and economically valuable metal resources, such as aluminum foil or copper foil that can be used as a current collector, as well as lithium, cobalt, nickel, etc. Therefore, the effective recycling of the spent lithium-ion batteries is crucial to alleviating resource pressure and achieving sustainable development of the lithium-ion battery industry. However, during the recycling of existing electrode sheet s, it is found that a new chemical reagent (e.g., a strong acid or a strong alkali, etc.,) is often added, which results in the damage or contamination to the current collector and an active material layer during the recycling, thereby reducing the recycling quality of the electrode sheet.

In view of this, the present disclosure provides an electrode sheet that can fundamentally solve the problems mentioned above.

Reference can be made to FIG. 1. FIG. 1 is a schematic structural view of a first electrode sheet provided in the present disclosure, and the schematic structural view of the electrode sheet is a cross-sectional view. As illustrated in FIG. 1, an electrode sheet 10 can include a current collector 11, a primer layer 12, an active material layer 13, and an edge coating layer 14. The primer layer 12 can be disposed on at least one surface of the current collector 11. The active material layer 13 is disposed on the primer layer 12. The edge coating layer 14 is disposed on at least one surface of the current collector 11 and connected to the primer layer 12. The primer layer 12 can be used to improve the binding force between the active material layer 13 and the current collector 11, thereby preventing the active material layer 13 from falling off from the current collector 11 after swelling during de-intercalation. In addition, the primer layer 12 can also be used to improve the conductivity of the electrode sheet 10. The edge coating layer 14 is used to prevent short circuit of the electrode sheet 10 caused by impact or puncture under external force, thereby improving the safety performance of the electrochemical apparatus.

After the electrode sheet in the present disclosure is immersed in water for a first preset time at a first preset temperature, a first peel strength of the primer layer is less than a second peel strength of the edge coating layer. The first preset temperature is a temperature set in advance, and the specific value of the first preset temperature can be determined according to actual environmental temperature or actual requirements. For example, the first preset temperature can range from 0°C to 35°C. In some specific embodiments, the first preset temperature may be 0°C, 10°C, 15°C, 20°C, 25°C, 30°C, 35°C, etc., but the first preset temperature is not limited to the listed values, and other unlisted values within this numerical range are also applicable. Similarly, the first preset time is a time set in advance, and the specific value of the first preset time can be set according to actual requirements. For example, the first preset time can range from 30 s to 5 min. In some specific embodiments, the first preset time may be 30 s, 1 min, 2 min, 3 min, 4 min, 5 min, etc., but the first preset time is not limited to the listed values, and other unlisted values within this numerical range are also applicable.

As can be seen, during the recycling of the electrode sheet in the present disclosure, after the electrode sheet is immersed in water for the first preset time at the first preset temperature, the first peel strength of the primer layer is less than the second peel strength of the edge coating layer, and thus the primer layer can be separated from the current collector first, and then the edge coating layer can be separated from the current collector, thereby achieving staged recycling of the electrode sheet. As such, the active material layer and the current collector with relatively high purity can be recycled, and the primer layer and the edge coating layer will not be peeled off at the same time, and thus mutual contamination between the primer layer, the active material layer, and the edge coating layer can be prevented, and the recycling quality of the electrode sheet is not affected. In addition, in the present disclosure, a simple water immersion can make a first water-based binder and a second water-based binder dissolve and swell, such that the primer layer and the edge coating layer can be easily peeled off from the current collector step by step. In this way, the recycling is cost-effective, environmentally friendly, and free from the introduction of impurities, such that the recycling rate of the electrode sheet and the electrochemical apparatus is relatively high, and the recycling quality of the electrode sheet and the electrochemical apparatus is improved.

Further, after the electrode sheet is immersed in water for the first preset time at the first preset temperature, the first peel strength of the primer layer is less than 0.1 N/m, and the second peel strength of the edge coating layer ranges from 1.0 N/m to 4.0 N/m. The second peel strength may be 1.0 N/m, 2.0 N/m, 3.0 N/m, 4.0 N/m, etc., but the second peel strength is not limited to the listed values, and other unlisted values within this numerical range are also applicable. It can be seen that after the electrode sheet is immersed in water for the first preset time at the first preset temperature, the first water-based binder in the primer layer has dissolved and swollen, such that the primer layer can be preferentially peeled off from the current collector. However, there is still a certain binding force between the edge coating layer and the current collector, and further treatment (e.g., increasing the temperature, etc.,) is required to separate the edge coating layer from the current collector, thereby preventing mutual contamination between the primer layer and the edge coating layer.

Further, after the electrode sheet is immersed in water for a second preset time at the first preset temperature, a third peel strength of the primer layer is less than a fourth peel strength of the edge coating layer, the second preset time is greater than the first preset time, the third peel strength is less than the first peel strength, and the fourth peel strength is less than the second peel strength.

The second preset time is greater than the first preset time. For example, when the first preset time is 1 min, the second preset time may be 2 min, 3 min, etc. It can be understood that after the electrode sheet is immersed in water for the second preset time at the first preset temperature, the third peel strength of the primer layer is less than the fourth peel strength of the edge coating layer, which indicates that when the electrode sheet provided in the present disclosure is immersed in water at the same temperature, even if the water immersion time is extended, the peel strength of the primer layer is still less than the peel strength of the edge coating layer. Therefore, when the electrode sheet provided in the present disclosure is recycled, the primer layer and the edge coating layer can be recycled in stages, and thus mutual contamination between the primer layer and the edge coating layer can be prevented, and the recycling quality is not reduced. In addition, as the water immersion time is increased, the peel strength of the primer layer and the peel strength of the edge coating layer decrease, which further indicates that the simple water immersion can be performed on the electrode sheet provided in the present disclosure, to enable the edge coating layer and the primer layer to be peeled off from the current collector, thereby ensuring a relatively high recycling quality of the electrode sheet provided in the present disclosure.

Further, after the electrode sheet is immersed in water for the first preset time at a second preset temperature, a fifth peel strength of the primer layer is less than a sixth peel strength of the edge coating layer, the second preset temperature is greater than the first preset temperature, the fifth peel strength is less than the first peel strength, and the sixth peel strength is less than the second peel strength.

The second preset temperature is greater than the first preset temperature. For example, when the first preset temperature is 25°C, the second preset temperature may be 45°C, 50°C, etc. It can be understood that after the electrode sheet is immersed in water for the first preset time at the second preset temperature, the fifth peel strength of the primer layer is less than the sixth peel strength of the edge coating layer, which indicates that when the electrode sheet provided in the present disclosure is immersed in water at the same time, even if the immersion temperature is increased, the peel strength of the primer layer is still less than the peel strength of the edge coating layer. Therefore, when the electrode sheet provided in the present disclosure is recycled, the primer layer and the edge coating layer can be recycled in stages, and thus mutual contamination between the primer layer and the edge coating layer can be prevented, and the recycling quality is not reduced. In addition, as the water immersion temperature is increased, the peel strength of the primer layer and the peel strength of the edge coating layer decrease, which further indicates that the water immersion temperature can be simply increased for the electrode sheet provided in the present disclosure, to enable the edge coating layer and the primer layer to be peeled off from the current collector, thereby ensuring a relatively high recycling quality of the electrode sheet provided in the present disclosure.

It can be understood that the electrode sheet may be a positive electrode sheet or a negative electrode sheet. When the electrode sheet is a positive electrode sheet, correspondingly, the current collector is a positive electrode current collector (e.g., aluminum foil), and the active material layer is a positive electrode active material layer. When the electrode sheet is a negative electrode sheet, correspondingly, the current collector is a negative electrode current collector (e.g., copper foil), and the active material layer is a negative electrode active material layer.

The primer layer of the electrode sheet can include the first water-based binder, and the first water-based binder can include at least one of a polyacrylic acid binder or a styrene-butadiene rubber binder. It can be understood that the first water-based binder has good hydrophilicity, and thus the primer layer can be quickly peeled off from the current collector during the recycling of the electrode sheet.

A mass percentage of a mass of the first water-based binder in a total mass of the primer layer ranges from 40% to 55%. It can be understood that, when the mass percentage of the mass of the first water-based binder in the total mass of the primer layer is excessively low, the primer layer has poor film-forming property, which is not conducive to improving the coverage of the primer layer. When the mass percentage of the mass of the first water-based binder in the total mass of the primer layer is excessively high, high viscosity of the first water-based binder may intensify the shrinkage of the primer layer during drying and film-forming, while the current collector hardly shrinks. During a usage stage, a great difference between a shrinkage rate of the primer layer and a shrinkage rate of the current collector will lead to a large area of the primer layer falling off from the current collector, a large area of the active material layer falling off from the current collector, and even abnormal operation of the electrode sheet.

A weight average molecular weight of the first water-based binder ranges from 30,000 to 100,000. It can be understood that, when the weight average molecular weight of the first water-based binder is excessively small, viscosity of a slurry may be excessively low, a film-forming property of the slurry may be poor, and a primer layer slurry may be coated incompletely, which are not conducive for binding. When the weight average molecular weight of the first water-based binder is excessively large, the slurry may be dispersed unevenly, and thus the primer layer may tend to partially fall off during the usage stage.

In addition, the primer layer can further include a conductive agent, and the specific type of the conductive agent may include at least one member selected from a group consisting of acetylene black, conductive carbon black, carbon nanotube, graphene, etc. As such, the conductivity of the electrode sheet can be enhanced with the primer layer including the conductive agent.

The active material layer of the electrode sheet typically includes an electrode sheet active material, a binder, and a conductive agent. Certainly, the active material layer can also include optional additives or auxiliaries, such as a lithium supplement agent, sodium supplement agent, etc., as needed. Specifically, a slurry including the electrode sheet active material, the conductive agent, the binder, etc., is coated on at least one surface of the current collector. After drying and other post-treatments, the active material layer of the present disclosure is obtained. The coating may be single-layer coating or multi-layer coating, which is not limited in the present disclosure.

For the positive electrode sheet, various positive electrode sheet active materials commonly used in the field can be selected. In some specific embodiments, the positive electrode sheet active material may include at least one member selected from a group consisting of lithium iron phosphate, lithium manganese oxide, lithium cobalt oxide, nickel-cobalt-manganese ternary material, nickel-cobalt-aluminum ternary material, etc., which is not limited in the present disclosure. For the negative electrode sheet, various negative electrode sheet active materials commonly used in the field may be selected. In some specific embodiments, the negative electrode sheet active material may include at least one member selected from a group consisting of graphite, lithium titanate, silicon-carbon composite material, etc., which is not limited in the present disclosure.

The conductive agent in the active material layer may include at least one member selected from a group consisting of conductive carbon material and metal material. In some specific embodiments, the conductive carbon material includes at least one member selected from a group consisting of zero-dimensional conductive carbon such as acetylene black and conductive carbon black, one-dimensional conductive carbon such as carbon nanotube, two-dimensional conductive carbon such as conductive graphite and graphene, and three-dimensional conductive carbon such as reduced graphene oxide. The metal material includes at least one member selected from a group consisting of aluminum powder, iron powder, and silver powder. The binder in the active material layer may be the first water-based binder in the primer layer or the second water-based binder in the edge coating layer. For the specific types of the binder, reference can be made to the descriptions in the present disclosure, which will not be repeated herein.

The edge coating layer in the electrode sheet can include the second water-based binder and an inorganic material. Certainly, the edge coating layer can also include optional additives or auxiliaries, such as a dispersant, etc., as needed.

The second water-based binder can include a hydrophobic group. In some specific embodiments, the hydrophobic group may include, but is not limited to, one member selected from a group consisting of ester group, hydrocarbon group, etc. It can be understood that the present disclosure utilizes the hydrophobicity of the hydrophobic group in the second water-based binder, enabling the edge coating layer including the second water-based binder to be peeled off from the current collector later than the primer layer including the first water-based binder during the recycling of the electrode sheet, thereby achieving the staged recycling of the electrode sheet.

A mass percentage of a mass of the hydrophobic group in a total mass of the second water-based binder is greater than or equal to 50%. It can be understood that when the mass percentage of the mass of the hydrophobic group in the total mass of the second water-based binder is excessively low, a peel strength between the current collector and the edge coating layer in the electrode sheet after being immersed in water may be relatively low, and the edge coating layer and the primer layer may be peeled off from the current collector at the same time, thereby leading to cross contamination between the edge coating layer and the primer layer and reducing the recycling quality of the electrode sheet.

In some specific embodiments, the second water-based binder includes a polymer formed by polymerizing at least one monomer selected from a group consisting of acrylic acid, acrylonitrile, acrylate, acrylamide, and methacrylic acid, which is not limited in the present disclosure. It can be understood that the second water-based binder has a stronger hydrophobicity than the first water-based binder, and thus the edge coating layer and the primer layer will not be peeled off from the current collector at the same time.

A weight average molecular weight of the second water-based binder is greater than or equal to 400,000. It can be understood that, when the weight average molecular weight of the second water-based binder is excessively small, viscosity of a slurry may be excessively low, a film-forming property of the slurry may be poor, and an edge coating layer slurry may be coated incompletely, which are not conducive for binding.

In some specific embodiments, the inorganic material includes at least one member selected from a group consisting of boehmite, alumina, insulating carbon black, magnesium oxide, silicon oxide, zirconium oxide, and calcium oxide, which is not limited in the present disclosure. The average particle size *D*50 of the inorganic material may range from 0.3 µm to 20 µm. It may be understood that, when the average particle size *D*50 of the inorganic material is excessively small, the specific surface area will be excessively large, which may affect the peel strength and make it difficult to peel off during the recycling. When the average particle size *D*50 of the inorganic material is excessively large, the formed edge coating layer may be brittle, which may affect the edge-coating effect and result in significant damage to the current collector during coating.

It may be understood that, *D*50 refers to a corresponding particle size when a cumulative volume fraction of the inorganic material reaches 50% in a volume-based distribution, i.e., the median particle size in the volume-based distribution. The particle size of the inorganic material can be measured using a laser diffraction particle size analyzer (e.g., Malvern Mastersizer 3000).

A mass percentage of a mass of the second water-based binder in a total mass of the edge coating layer ranges from 5% to 25%, and a mass percentage of a mass of the inorganic material in the total mass of the edge coating layer ranges from 75% to 925%. It can be understood that, when the content of the second water-based binder is excessively low, the edge coating layer has poor film-forming property, which is not conducive to improving the coverage of the edge coating layer. When the content of the second water-based binder is excessively high, high viscosity of the second water-based binder may intensify the shrinkage of the edge coating layer during drying and film-forming, while the current collector hardly shrinks. A great difference between a shrinkage rate of the edge coating layer and the shrinkage rate of the current collector will lead to a large area of the edge coating layer falling off from the current collector.

Additionally, both an initial peel strength of the primer layer and an initial peel strength of the edge coating layer can be greater than or equal to 10 N/m, indicating that both the first water-based binder and the second water-based binder used in the present disclosure have excellent binding effects.

Both swelling ratios of the primer layer and the edge coating layer after being immersed in an electrolyte solution for 48 hours at 50°C are less than 5%, indicating that both the primer layer and an insulating layer in the present disclosure have excellent resistance to electrolyte solution swelling. In this case, a thickness growth rate of the electrochemical apparatus can be reduced, and the performance of the electrochemical apparatus can be improved.

Further, the present disclosure further provides a method for electrode sheet recycling. The method is applicable to the electrode sheet mentioned above. The method for electrode sheet recycling can include operations at S101 to S105 as follows.

S101, the electrode sheet is provided, where the electrode sheet includes the current collector, the primer layer disposed on the surface of the current collector, the edge coating layer disposed on the surface of the current collector, and the active material layer disposed on the primer layer. The primer layer includes the first water-based binder. The edge coating layer includes the second water-based binder.

For specific types and contents of the first water-based binder and the second water-based binder, reference can be made to the descriptions mentioned above, which are not repeated herein.

S102, the electrode sheet is immersed in a first aqueous solution for 1 min to 5 min, to make the first water-based binder swell.

It can be understood that the first water-based binder has good hydrophilicity, and thus immersing the electrode sheet in the first aqueous solution for 1 min to 5 min can enable the first water-based binder to dissolve and accelerate swelling, thereby damaging a stable structure of the primer layer and the current collector, making it easier to separate the primer layer and the current collector in the next operation. In some possible embodiments, the temperature of the first aqueous solution is different from the temperature of a second aqueous solution. The temperature of the first aqueous solution can range from 15°C to 35°C, specifically, 15°C, 20°C, 25°C, 30°C, 35°C, etc., but the temperature of the first aqueous solution is not limited to the listed values, and other values not listed within this numerical range are also applicable. Since the first water-based binder has better hydrophilicity than the second water-based binder, when the electrode sheet including the primer layer and the edge coating layer is immersed in the first aqueous solution at a temperature ranging from 15°C to 35°C, the primer layer including the first water-based binder can be peeled off from the current collector before the edge coating layer including the second water-based binder, while the primer layer including the second water-based binder is still bonded to the current collector. In this way, mutual contamination between the primer layer and the edge coating layer can be prevented, and the recycling quality of the electrode sheet is not poor.

S103, the electrode sheet in the first aqueous solution is sonicated, to separate a first composition from a second composition, where the first composition includes the primer layer and the active material layer, and the second composition includes the current collector and the edge coating layer.

It can be understood that in the present disclosure, since the active material layer is disposed on the primer layer, when the primer layer including the first water-based binder is peeled off from the current collector, the active material layer is also peeled off from the current collector. Therefore, when the electrode sheet in the first aqueous solution is sonicated, the first composition including the primer layer and the active material layer can be separated from the current collector.

After the first water-based binder swells in the first aqueous solution, work can be done by applying external force to the electrode sheet, so as to separate the first composition from the current collector. Specifically, the electrode sheet in the first aqueous solution can be sonicated, such that the first composition and the current collector are subject to force and vibrate accordingly. The primer layer and the active material layer swell to form fine powders, the current collector is metal, and the primer layer and the active material layer have a different mass from the current collector, and thus the primer layer and the active material layer have a greatly different vibration amplitude from the current collector when they are subject to the same external force. Therefore, the first composition including the primer layer and the active material layer can be separated from the current collector, thereby preventing the edge coating layer from contaminating the active material layer.

In some possible embodiments, the vibration frequency of ultrasonic waves used in the sonication ranges from 2 MHz to 10 MHz, and the vibration time of the ultrasonic waves used in the sonication ranges from 1 min to 20 min. In some specific embodiments, the vibration frequency may be 2 MHz, 4 MHz, 5 MHz, 7 MHz, 8 MHz, 10 MHz, etc., but the vibration frequency is not limited to the listed values, and other values not listed within this numerical range are also applicable. It can be understood that when the vibration frequency is excessively low, the operating frequency of the ultrasonic vibration is excessively low, and it is difficult to separate the first composition from the current collector. When the vibration frequency is excessively high, the separation effect of the electrode sheet is not greatly improved, resulting in energy waste. In some specific embodiments, the vibration time may be 1 min, 3 min, 5 min, 8 min, 9 min, 10 min, 14 min, 15 min, 18 min, 20 min, etc., but the vibration time is not limited to the listed values, and other values not listed within this numerical range are also applicable. It can be understood that when the vibration time is excessively short, the separation in the first composition and the separation in the second composition are not completed, which tends to cause cross contamination. When the operating time of the ultrasonic vibration is longer than 20 min, the operating time of the ultrasonic vibration is excessively long, and the separation in the first composition and the separation in the second composition have already been completed, resulting in energy waste.

S104, the second composition is immersed in the second aqueous solution for 1 min to 5 min, to make the second water-based binder swell.

It can be understood that since the second water-based binder is more hydrophobic than the first water-based binder, when the electrode sheet is immersed in the first aqueous solution, the second water-based binder will swell but will not enable the edge coating layer to be peeled off from the current collector, and further treatment is required to separate the edge coating layer from the current collector, thereby recycling the current collector. In some possible embodiments, the second composition including the edge coating layer and the current collector can be immersed in the second aqueous solution for 1 min to 5 min, such that the second water-based binder can completely swell, thereby damaging a stable structure of the edge coating layer and the current collector. The temperature of the second aqueous solution can range from 45°C to 60°C, specifically, 45°C, 50°C, 55°C, 60°C, etc., but the temperature of the second aqueous solution is not limited to the listed values, and other values not listed within this numerical range are also applicable. Since the second water-based binder has better hydrophobicity than the first water-based binder, the second water-based binder can completely swell by immersing the second composition in the second aqueous solution with a relatively high temperature, thereby achieving complete separation in the edge coating layer from the current collector and recycling a current collector with relatively high purity.

S105, the second composition in the second aqueous solution is sonicated, to separate the edge coating layer from the current collector in the second composition.

Similarly, after the second water-based binder swells in the second aqueous solution, work can be done by applying external force to the second composition in the second aqueous solution, so as to separate the edge coating layer from the current collector in the second composition. Specifically, the second composition in the second aqueous solution can be sonicated, such that the edge coating layer and the current collector can be subject to force and vibrate accordingly. The material in the edge coating layer swells to form fine powders, the current collector is metal, and the edge coating layer has a different mass from the current collector, and thus the edge coating layer has a greatly different vibration amplitude from the current collector when they are subject to the same external force. Therefore, the edge coating layer can be separated from the current collector, thereby recycling the current collector with relatively high purity.

In some possible embodiments, the vibration frequency of the ultrasonic waves used in the sonication ranges from 2 MHz to 10 MHz, and the vibration time of the ultrasonic waves used in the sonication ranges from 1 min to 20 min. In some specific embodiments, the vibration frequency may be 2 MHz, 4 MHz, 5 MHz, 7 MHz, 8 MHz, 10 MHz, etc., but the vibration frequency is not limited to the listed values, and other unlisted values within this numerical range are also applicable. It can be understood that when the vibration frequency is excessively low, the operating frequency of the ultrasonic vibration is excessively low, and it is difficult to separate the first composition from the current collector. When the vibration frequency is excessively high, the separation effect of the electrode sheet is not greatly improved, resulting in energy waste. In some specific embodiments. The vibration time may be 1 min, 3 min, 5 min, 8 min, 9 min, 10 min, 14 min, 15 min, 18 min, 20 min, etc., but the vibration time is not limited to the listed values, and other values not listed within this numerical range are also applicable. It can be understood that when the vibration time is excessively short, the separation in the edge coating layer from the current collector is not completed, resulting in a recycled current collector with relatively low purity. When the operating time of the ultrasonic vibration is longer than 20 min, the separation in the edge coating layer from the current collector has been completely completed, resulting in energy waste.

It can be understood that the method for electrode sheet recycling provided in the present disclosure utilizes the difference in hydrophilicity between the first water-based binder and the second water-based binder, to first separate the primer layer from the current collector, and then separate the edge coating layer from the current collector, thereby achieving the staged recycling of the electrode sheet. As such, the active material layer and the current collector with relatively high purity can be recycled, and the primer layer and the edge coating layer can be prevented from being peeled off at the same time, and thus mutual contamination between the primer layer, the active material layer, and the edge coating layer can be prevented, and the recycling quality of the electrode sheet is not affected. In addition, in the present disclosure, the simple water immersion can make the first water-based binder and the second water-based binder dissolve and swell, and then sonication is performed, such that the primer layer and the edge coating layer can be easily peeled off from the current collector step by step without adding any chemical reagents. In this way, the recycling is cost-effective, environmentally friendly, free from the introduction of impurities, and no loss of beneficial components, such as active material, the current collector, etc., such that the recycling quality of the electrode sheet is relatively high.

Additionally, the present disclosure further provides an electrochemical apparatus. The electrochemical apparatus includes a positive electrode sheet, a negative electrode sheet, a separator, and electrolyte. The positive electrode sheet and/or the negative electrode sheet each is the electrode sheet mentioned above. The electrochemical apparatus of the present disclosure may be a capacitor, a primary battery, or a secondary battery. For example, the electrochemical apparatus may be a lithium-ion capacitor, a lithium battery, a lithium-ion battery, etc. The present disclosure does not limit the type of the electrochemical apparatus.

The present disclosure does not specifically limit the type of separator in the electrochemical apparatus, which can be selected according to actual requirements. Specifically, the separator may be at least one member selected from a group consisting of polyethylene, polypropylene, polyvinylidene fluoride, polymethyl methacrylate, etc.

A lithium-ion battery is taken as an example. The electrolyte solution includes a lithium salt and a non-aqueous organic solvent. The lithium salt may include at least one member selected from a group consisting of lithium hexafluorophosphate (LiPF₆), lithium bis (trifluoromethanesulfonyl) imide (LiTFSI), lithium trifluoromethanesulfonate, lithium bis (fluorosulfonyl) imide (LiFSI), lithium tetrafluoroborate (LiBF₄), lithium bis (oxalato) borate (LiBOB), lithium difluoro (oxalato) borate (LiODFB), and lithium perchlorate, etc. The non-aqueous organic solvent may include at least one member selected from a group consisting of dimethyl carbonate (DMC), diethyl carbonate (DEC), ethyl methyl carbonate (EMC), ethylene carbonate (EC), propylene carbonate (PC), methyl acetate (MA), ethyl acetate (EA), ethyl propionate (EP), propyl propionate (PP), and ethyl butyrate (EB), etc.

The present disclosure will be further described below in conjunction with embodiments. It can be understood that the embodiments provided in the present disclosure are only intended to facilitate understanding of the present disclosure and cannot be construed as specific limitations to the present disclosure. In the embodiments, only the case where the electrochemical apparatus is a lithium-ion battery is illustrated, but the present disclosure is not limited thereto.

For ease of understanding of the present disclosure, the following embodiments are listed in the present disclosure. It can be clear to those skilled in the art that unspecified specific conditions in the embodiments are conducted under conventional conditions or conditions recommended by manufacturers. Reagents or instruments for which the manufacturer is not specified are conventional products that can be obtained through commercial purchase.

Primer layer slurries in embodiment 1, embodiment 2, comparative example 1, and comparative example 2 are prepared according to the following method.

The pH of a first water-based binder is neutralized to 7±1, and the first water-based binder and acetylene black as conductive agent are mixed in a ratio of 9:11, followed by the addition of deionized water. The mixture is evenly stirred until a slurry has a stable viscosity, and then a primer layer slurry with a solid content of 20% is obtained. The weight average molecular weight of the first water-based binder ranges from 30,000 to 40,000. The specific type and content of the first water-based binder are illustrated in Table 1.

Edge coating layer slurries in embodiment 1, embodiment 2, and comparative example 2 are prepared according to the following method.

A second water-based binder and an inorganic material are mixed, followed by the addition of deionized water. The mixture is evenly stirred until a slurry has a stable viscosity, and then an edge coating layer slurry with a solid content of 10%-40% is obtained. The edge coating layer slurry is poured into an edge coating buffer tank of an extrusion coater. The weight average molecular weight of the second water-based binder is 400,000. The specific types and contents of the second water-based binder and the inorganic material are illustrated in Table 1.

The edge coating layer slurry in comparative example 1 is prepared according to the following method.

Polyvinylidene fluoride (PVDF) and boehmite are mixed at a mass ratio of 8%:92%, followed by the addition of N-methylpyrrolidone (NMP). The mixture is evenly stirred until a slurry has a stable viscosity, and then an edge coating layer slurry with a solid content of 10%-40% is obtained. The weight average molecular weight of the PVDF is 900,000.

Electrode sheets in embodiment 1, embodiment 2, comparative example 1, and comparative example 2 are prepared according to the following method.111

The electrode sheet coating is performed by using a 30L extrusion coater along with the primer layer slurry and the edge coating layer slurry, to produce an electrode sheet with an areal density of 195 g/m². The electrode sheet has a film width of 150±0.5 mm and an edge coating width of 8±0.3 mm. In order to better test the peel strength of the electrode sheets with different edge coatings, various types of edge coating layer slurries are coated on a current collector using a 100 mm scraper in a blade coating manner. After being roasted in an oven, an electrode sheet with an edge coating layer of 100±0.5 mm in width is obtained.

Table 1 illustrates the specific types and contents of the first water-based binder of the primer layer and the second water-based binder and the inorganic material of the edge coating layer in embodiment 1, embodiment 2, comparative example 1, and comparative example 2. In Table 1, the content of the first water-based binder is expressed as a mass percentage calculated based on the total mass of the primer layer, and the contents of the second water-based binder and inorganic material are expressed as mass percentages calculated based on the total mass of the edge coating layer.

**Table 1**

| | First water-based binder | | | Second water-based binder | | | Inorganic material | |
|---|---|---|---|---|---|---|---|---|
| | Type | Content | Molecular weight | Type | Content | Molecular weight | Type | Content |
| Embodiment 1 | polyacrylic acid | 9% | 30,000-40,000 | 80% methacrylic acid+15% acrylonitrile +5% acrylamide | 8% | 400,000 | boehmite | 92% |
| Embodiment 2 | polyacrylic acid | 9% | 30,000-40,000 | 80% methacrylic acid+15% acrylonitrile +5% acrylamide | 10% | 400,000 | boehmite | 90% |
| Comparative example 1 | polyacrylic acid | 9% | 30,000-40,000 | PVDF | 8% | 900,000 | boehmite | 92% |
| Comparative example 2 | polyacrylic acid | 9% | 30,000-40,000 | 80% methacrylic acid+15% acrylonitrile +5% acrylamide | ≤4% | 400,000 | boehmite | ≥96% |

For example, the first preset temperature is taken as 25°C, the second preset temperature is taken as 45°C, the first preset time is taken as 1 min, and the second preset time is taken as 3 min. The edge coating layers prepared in embodiment 1, embodiment 2, comparative example 1, and comparative example 2 are respectively subject to an initial peel strength test and a peel strength test after water immersion. It may be understood that the initial peel strength refers to a peel strength of a freshly prepared electrode sheet. The peel strength test method can be as follows. The obtained edge coating electrode sheet is cut into a strip-shaped electrode sheet using a 15*150 mm blade die. A GOTECH^{™} tensile testing machine is used for 180° peeling with a peeling length of 100 mm. The peel strength is obtained after completing the test. Before testing the peel strength of the edge coating electrode sheet after being immersed in water, the surface water of the edge coating electrode sheet is absorbed with air-laid paper, and then the test is performed according to the above method.

Table 2 illustrates test results of initial peel strength and peel strength after water immersion for 1 min and 3 min at 25°C and 45°C of the primer layers and the edge coating layers in the positive electrode sheets prepared in embodiment 1, embodiment 2, comparative example 1, and comparative example 2.

**Table 2**

| | Primer layer | | | | Edge coating layer | | | |
|---|---|---|---|---|---|---|---|---|
| | Initial peel strength (N/m) | Peel strength after being immersed in water (N/m) | | | Initial peel strength (N/m) | Peel strength after being immersed in water (N/m) | | |
| | | 25 °C | 25 °C | 45 °C | | 25 °C | 25 °C | 45 °C |
| | | 1 min | 3 min | 1 min | | 1 min | 3 min | 1 min |
| Embodiment 1 | Coating<2µm, unable to test | Direct large-area peeling, unable to test | Direct large-area peeling, unable to test | Direct large-area peeling, unable to test | 82.3 | 1.2 | Direct peeling | Direct peeling |
| Embodiment 2 | Coating<2µm, unable to test | Direct large-area peeling, unable to test | Direct large-area peeling, unable to test | Direct large-area peeling, unable to test | 83.3 | 2.2 | 1.5 | Direct peeling |
| Comparative example 1 | Coating<2µm, unable to test | Direct large-area peeling, unable to test | Direct large-area peeling, unable to test | Direct large-area peeling, unable to test | 11.2 | 10.2 | 8.5 | 6.5 |
| Comparative example 2 | Coating<2µm, unable to test | Direct large-area peeling, unable to test | Direct large-area peeling, unable to test | Direct large-area peeling, unable to test | 30.4 | Direct peeling, unable to test | Direct peeling, unable to test | Direct peeling, unable to test |

Analysis of related data in Table 2 reveals that compared with other embodiments, comparative example 1 illustrates relatively low peel strength between the current collector and the primer layer after water immersion for 1 min at 25°C, but relatively low initial peel strength between the current collector and the edge coating layer and relatively high peel strength of the edge coating layer after water immersion for 1 min at 25°C. Notably, comparative example 1 exhibits almost no change in initial peel strength and peel strength of the current collector and the edge coating layer after water immersion for 1 min. The possible reason is that the PVDF is the binder and the NMP is the solvent, and both of them have lipophilicity, which means that they are difficult to dissolve in water. Therefore, even after water immersion for 1 min at 25°C, it remains difficult to peel off the edge coating layer from the current collector. In addition, in comparative example 1, the water immersion time is extended to 3 min, and the water immersion temperature is increased to 45°C. In this case, the edge coating layer is still difficult to be completely peeled off from the current collector. Correspondingly, in embodiment 1 and embodiment 2, after water immersion for 1 min at 25°C, the primer layer is the first to be peeled off from the current collector in a large area, while the edge coating layer is still bonded to the current collector. As can be seen, by adding the first water-based binder that is more hydrophilic than the edge coating layer to the primer layer, the primer layer and the edge coating layer can be recycled in stages. As such, the primer layer and the edge coating layer can be prevented from being peeled off at the same time, and thus mutual contamination between the primer layer, the active material layer, and the edge coating layer can be prevented, and the recycling quality of the electrode sheet can be improved. In addition, in embodiment 1 and embodiment 2, after water immersion for 1 min at 25°C, although the edge coating layer is still bonded to the current collector, the binding force is relatively small, and simple treatment (e.g., extending the water immersion time to 3 min or increasing the water immersion temperature to 45°C, etc.,) can be performed to easily separate the edge coating layer from the current collector. In this way, the recycling is cost-effective, environmentally friendly, and free from the introduction of impurities, such that the recycling quality of the electrode sheet is relatively high.

As can be seen from embodiment 1 and embodiment 2, when the water immersion temperature is 25°C and the water immersion time is extended from 1 min to 3 min, the peel strength of the primer layer is less than the peel strength of the edge coating layer, which indicates that when the electrode sheet provided in the present disclosure is immersed in water at the same temperature, even if the water immersion time is extended, the peel strength of the primer layer is still less than the peel strength of the edge coating layer. Therefore, when the electrode sheet provided in the present disclosure is recycled, the primer layer and the edge coating layer can be recycled in stages, and thus mutual contamination between the primer layer and the edge coating layer can be prevented, and the recycling quality is not reduced. In addition, as the water immersion time is increased to 3 min, the peel strength of the edge coating layer decreases accordingly, which further indicates that the simple water immersion can be performed on the electrode sheet provided in the present disclosure, to enable the edge coating layer and the primer layer to be peeled off from the current collector, thereby ensuring a relatively high recycling quality of the electrode sheet provided in the present disclosure. Furthermore, as can be seen from embodiment 1 and embodiment 2, when the water immersion time is 1 min and the water immersion temperature is increased from 25°C to 45°C, the peel strength of the edge coating layer decreases accordingly, which indicates that the water immersion temperature can be simply increased for the electrode sheet provided in the present disclosure, to enable the edge coating layer and the primer layer to be peeled off from the current collector, thereby ensuring a relatively high recycling quality of the electrode sheet provided in the present disclosure.

As can be seen from embodiment 1, embodiment 2, and comparative example 2, the peel strength of the edge coating layer after water immersion is also related to the content of the second water-based binder. Since the second water-based binder includes a hydrophobic group, when the content of the second water-based binder is excessively small (e.g., less than or equal to 4%), the hydrophilicity of the edge coating layer may be enhanced, and thus the edge coating layer and the primer layer are peeled off from the current collector at the same time, leading to mutual contamination between the edge coating layer and the primer layer and reducing the recycling quality of the electrode sheet. Therefore, the content of the second water-based binder in the edge coating layer cannot be excessively low, and the mass percentage of the mass of the second water-based binder in the total mass of the edge coating layer preferably ranges from 5% to 25%.

It can be noted that, if the electrode sheet prepared in the present disclosure has an excessively thin (<2 µm) primer layer, the initial peel strength of the primer layer cannot be tested. When the primer layer with a thickness from 30 µm to 50 µm is subject to the initial peel strength test, the initial peel strength of the primer layer can reach 10 N/m or beyond, which can indicate that the primer layer including the first water-based binder has a good binding effect during the use of the electrode sheet. In addition, the primer layer including the first water-based binder after water immersion has a very low peel strength, which indicates that the electrode sheet provided in the present disclosure can be easily recycled.

In summary, when the electrode sheet in the present disclosure is recycled, the peel strength of the primer layer is less than the peel strength of the edge coating layer, and thus the primer layer can be separated from the current collector first, and then the edge coating layer can be separated from the current collector, thereby achieving the staged recycling of the electrode sheet. As such, the active material layer and the current collector with relatively high purity can be recycled, and the primer layer and the edge coating layer will not be peeled off at the same time, and thus the mutual contamination between the primer layer, the active material layer, and the edge coating layer can be prevented, and the recycling quality of the electrode sheet is not affected. In addition, in the present disclosure, the simple water immersion can make the first water-based binder and the second water-based binder dissolve and swell, such that the primer layer and the edge coating layer can be easily peeled off from the current collector step by step. In this way, the recycling is cost-effective, environmentally friendly, and free from the introduction of impurities, such that the recycling quality of the electrode sheet and the electrochemical apparatus is improved.

Finally, it can be noted that the foregoing embodiments are merely intended for describing the technical solutions of the present disclosure but are not intended as a limitation on the protection scope of the present disclosure. Although the present disclosure is described in detail with reference to preferred embodiments, those of ordinary skill in the art understand that modifications or equivalent replacements may be made to the technical solutions of the present disclosure without departing from the essence and scope of the technical solutions of the present disclosure.

## Claims

1. An electrode sheet, comprising:
a current collector;
a primer layer disposed on at least one surface of the current collector;
an active material layer disposed on the primer layer; and
an edge coating layer disposed on at least one surface of the current collector and connected to the primer layer; wherein
the primer layer comprises a first water-based binder, the edge coating layer comprises a second water-based binder and an inorganic material, and a first peel strength of the primer layer is less than a second peel strength of the edge coating layer after the electrode sheet is immersed in water for a first preset time at a first preset temperature.

2. The electrode sheet of claim 1, wherein the first peel strength of the primer layer is less than 0.1 N/m, and the second peel strength of the edge coating layer ranges from 1.0 N/m to 4.0 N/m.

3. The electrode sheet of claim 1 or 2, wherein after the electrode sheet is immersed in water for a second preset time at the first preset temperature, a third peel strength of the primer layer is less than a fourth peel strength of the edge coating layer, the second preset time is greater than the first preset time, the third peel strength is less than the first peel strength, and the fourth peel strength is less than the second peel strength.

4. The electrode sheet of any one of claims 1 to 3, wherein after the electrode sheet is immersed in water for the first preset time at a second preset temperature, a fifth peel strength of the primer layer is less than a sixth peel strength of the edge coating layer, the second preset temperature is greater than the first preset temperature, the fifth peel strength is less than the first peel strength, and the sixth peel strength is less than the second peel strength.

5. The electrode sheet of any one of claims 1 to 4, wherein the second water-based binder comprises a hydrophobic group, and a mass percentage of a mass of the hydrophobic group in a total mass of the second water-based binder is greater than or equal to 50%.

6. The electrode sheet of any one of claims 1 to 5, wherein the first water-based binder comprises at least one of a polyacrylic acid binder or a styrene-butadiene rubber binder, and the second water-based binder comprises a polymer formed by polymerizing at least one monomer selected from a group consisting of acrylic acid, acrylonitrile, acrylate, acrylamide, and methacrylic acid.

7. The electrode sheet of any one of claims 1 to 6, wherein a weight average molecular weight of the first water-based binder ranges from 30,000 to 100,000, and a weight average molecular weight of the second water-based binder is greater than or equal to 400,000.

8. The electrode sheet of any one of claims 1 to 7, wherein the inorganic material comprises at least one member selected from a group consisting of boehmite, aluminum oxide, insulating carbon black, magnesium oxide, silicon oxide, zirconium oxide, and calcium oxide.

9. The electrode sheet of any one of claims 1 to 8, wherein a mass percentage of a mass of the first water-based binder in a total mass of the primer layer ranges from 40% to 55%; and a mass percentage of a mass of the second water-based binder in a total mass of the edge coating layer ranges from 5% to 25%, and a mass percentage of a mass of the inorganic material in the total mass of the edge coating layer ranges from 75% to 95%.

10. The electrode sheet of any one of claims 1 to 9, wherein both swelling ratios of the primer layer and the edge coating layer after being immersed in an electrolyte solution for 48 hours at 50°C are less than 5%.

11. A method for electrode sheet recycling applicable to the electrode sheet of any one of claims 1 to 10, and comprising:
providing the electrode sheet, wherein the electrode sheet comprises the current collector, the primer layer disposed on the surface of the current collector, the edge coating layer disposed on the surface of the current collector, and the active material layer disposed on the primer layer; and the primer layer comprises the first water-based binder, and the edge coating layer comprises the second water-based binder;
immersing the electrode sheet in a first aqueous solution for 1 min to 5 min, to make the first water-based binder swell;
sonicating the electrode sheet in the first aqueous solution, to separate a first composition from a second composition, wherein the first composition comprises the primer layer and the active material layer, and the second composition comprises the current collector and the edge coating layer;
immersing the second composition in a second aqueous solution for 1 min to 5 min, to make the second water-based binder swell; and
sonicating the second composition in the second aqueous solution, to separate the edge coating layer from the current collector in the second composition.

12. The method of claim 11, wherein a temperature of the first aqueous solution ranges from 15°C to 35°C, and a temperature of the second aqueous solution ranges from 45°C to 60°C.

13. An electrochemical apparatus, comprising:
a positive electrode sheet, a negative electrode sheet, a separator, and an electrolyte solution, wherein
the positive electrode sheet and/or the negative electrode sheet is the electrode sheet of any one of claims 1 to 10.
